Europäisches Patentamt

**European Patent Office**

**Office européen des brevets**

(19)

(11) Numéro de publication: **0 168 314**
**A1**

(12)

# DEMANDE DE BREVET EUROPEEN

(21) Numéro de dépôt: **85401300.0**

(22) Date de dépôt: **27.06.85**

(51) Int. Cl.⁴: **B 23 K 13/00**
**B 23 K 13/02**

(30) Priorité: **13.07.84 FR 8411183**

(43) Date de publication de la demande:
**15.01.86 Bulletin 86/3**

(84) Etats contractants désignés:
**BE DE GB IT SE**

(71) Demandeur: **SAPHYMO-STEL**
**29, avenue Carnot**
**F-91300 - Massy(FR)**

(72) Inventeur: **Delage, Daniel**
**THOMSON-CSF SCPI 173, bld Haussmann**
**F-75379 Paris Cedex 08(FR)**

(72) Inventeur: **Schoch, Jean-Marie**
**THOMSON-CSF SCPI 173, bld Haussmann**
**F-75379 Paris Cedex 08(FR)**

(74) Mandataire: **Grynwald, Albert et al,**
**THOMSON-CSF SCPI 173, Bld Haussmann**
**F-75379 Paris Cedex 08(FR)**

(54) Procédé et appareil de soudage par induction de pièces métalliques épaisses.

(57) Le procédé de soudage par induction de l'invention permet de souder bout à bout des plaques ou éléments métalliques, et consiste à effectuer d'abord un préchauffage par induction pour amener leur zone de contact à une température inférieure à la fusion, puis à effectuer un chauffage supplémentaire plus localisé pour porter à l'état liquide le métal au voisinage des surfaces à souder.

FIG_1

EP 0 168 314 A1

# PROCEDE ET APPAREIL DE SOUDAGE PAR INDUCTION DE PIECES METALLIQUES EPAISSES.

L'invention est relative à un procédé et à un appareil de soudage par induction de pièces métalliques épaisses.

On a souvent besoin dans l'industrie de souder entre elles des pièces métalliques épaisses. A cet effet lorsqu'on désire une soudure profonde, c'est-à-dire s'étendant sur une grande longueur à partir de la tranche des pièces épaisses, on effectue un soudage à l'arc avec apport de métal dans une gorge entre les surfaces à souder. On peut ainsi atteindre des profondeurs importantes, de l'ordre de plusieurs centimètres, par exemple au moins cinq centimètres. Mais on a constaté que ce procédé ne donnait pas toujours des soudures de bonne qualité. Pour obtenir des soudures de meilleure qualité sur de grandes profondeurs on peut également faire appel au bombardement électronique. Mais ce procédé est d'un prix très élevé.

Le soudage par induction permet d'obtenir des soudures de bonne qualité à faible coût. Toutefois on a observé qu'avec le procédé usuel de soudage par induction faisant appel à un chauffage à fréquence fixe, dans lequel l'inducteur est présenté au voisinage de la face d'extrémité des plaques, on ne peut effectuer la fusion pour le soudage que sur une profondeur limitée à environ 2 à 3 cm.

Par ailleurs, on connait d'après le brevet français 2 399 299 un procédé de soudage bout à bout, par induction, de pièces métalliques offrant des résultats nettement améliorés, notamment une meilleure localisation du chauffage grâce à l'emploi de courants à deux fréquences échelonnées et à l'application d'une pression en direction de la zone à souder. Toutefois un tel procédé ne peut être appliqué tel quel au soudage de pièces massives, en particulier à symétrie de révolution, pour lesquelles on ne peut envisager l'application d'une pression, surtout si elle est de valeur élevée.

L'invention remédie à ces inconvénients, c'est-à-dire fournit un procédé et un appareil de soudage par induction effectuant des soudures de bonne qualité à prix peu élevé et sur une profondeur plus importante que les procédés de soudage par induction connus jusqu'à présent, et ce, sans application de pression.

A cet effet on effectue un préchauffage par induction des pièces à souder de manière à amener ces pièces métalliques à une température inférieure, de préférence seulement légèrement inférieure, à la température de fusion des pièces à souder - si on effectue une soudure homogène -ou du métal d'apport entre les surfaces à souder, et on chauffe, également par induction, la zone de contact entre les pièces grâce à un inducteur en regard des faces d'extrémité desdites pièces de manière à créer un puits allongé de métal en fusion dans la zone de contact. C'est le préchauffage qui permet d'obtenir un puits de fusion allongé sans extension trop importante en direction radiale, c'est-à-dire sans extension en direction perpendiculaire à la surface de contact.

Les faces d'extrémité sont, dans une réalisation, perpendiculaires aux faces à souder. En variante les faces d'extrémité sont obliques par rapport aux faces à souder de façon à former une cavité évitant un débordement du liquide en fusion dû aux forces électromagnétiques qui tendent à chasser ce liquide et à créer des boursouflures et courts-circuits vis-à-vis de l'inducteur et également à détériorer l'état des surfaces d'extrémité.

Dans une réalisation l'inducteur de préchauffage et l'inducteur de fusion sont alimentés par des sources distinctes. La fréquence de la source d'alimentation de l'inducteur de préchauffage est par exemple comprise entre 50 Hertz et 1000 Hertz tandis que la fréquence d'alimentation de l'inducteur de fusion est dans cet exemple comprise entre 1000 et 20 000 Hertz.

Pour obtenir un préchauffage uniforme il est préférable que l'inducteur utilisé à cet effet comporte deux parties, la première étant du côté de la surface externe de la première pièce et la seconde se trouvant du côté de la surface externe de la seconde pièce. Lorsque les deux pièces sont cylindriques la première partie entoure la surface extérieure de la pièce externe et la seconde partie de l'inducteur de préchauffage est à l'intérieur de la seconde pièce cylindrique.

L'inducteur de fusion comporte une ou plusieurs spires couvrant toute la longueur à souder.En variante il est de petites dimensions par rapport à la pièce à souder, le soudage s'effectuant alors au défilé, c'est-à-dire par déplacement de l'inducteur de fusion le long de la face d'extrémité.

De même le préchauffage est effectué par un ou deux inducteurs fixes ou est réalisé au défilé.

D'autres caractéristiques et avantages de l'invention apparaîtront avec la description de certains de ses modes de réalisation, celle-ci étant effectuée en se référant aux dessins ci-annexés sur lesquels :

- la figure 1 est un schéma montrant un appareil selon l'invention pour le soudage de deux plaques épaisses, et

- la figure 2 est une vue schématique en perspective d'une cuve et d'un appareil de soudage qui correspond à une variante de celui représenté sur la figure 1.

Dans l'exemple qui va être décrit en relation avec les figures le procédé et l'appareil selon l'invention sont utilisés pour souder des pièces cylindriques coaxiales 12 et 19 en fonte épaisse. L'anneau 19 est à l'intérieur de l'anneau 12. Le diamètre de la surface externe 20 de la pièce 19 est légèrement inférieur au diamètre de la surface interne 16 de la pièce 12.

Les surfaces en contact 16 et 20 sont soudées sur toute leur longueur circonférentielle, autour de l'axe du cylindre qui forme ces surfaces, sur une profondeur (parallèlement à l'axe) importante, de l'ordre de 4 cm à partir des faces d'extrémité 22, 23.

Pour obtenir une soudure étanche et durable on utilise un chauffage par induction à l'aide d'inducteurs de préchauffage 30 et 31 permettant de chauffer la pièce interne 19 et la pièce externe 12 jusqu'à une température inférieure mais proche de la température de fusion de la fonte constituant ces éléments. On a constaté qu'on obtenait de bons résultats si le préchauffage permettait de chauffer le métal jusqu'à environ 200 à 300° C au-dessous de la température de fusion.

Pour effectuer le soudage sur une profondeur h, on fait appel à un inducteur de fusion 32 qui apporte l'énergie nécessaire pour que, localement, le métal soit porté à la température de fusion afin d'effectuer une soudure homogène.Cet inducteur 32 est disposé en regard des faces 22, 23.

Dans l'exemple l'inducteur 30 est formé de plusieurs spires entourant la pièce 12. L'inducteur 31 est également formé de plusieurs spires à l'intérieur du cylindre 19. Une telle configuration à deux inducteurs 30 et 31 assure un chauffage uniforme des pièces 12 et 19. Les inducteurs 30 et 31 sont, dans une réalisation, en série et alimentés par une même source de moyenne fréquence (MF) comprise entre 50 Hertz et 1000 Hertz. La fréquence et/ou la puissance sera choisie pour obtenir une température de l'ordre de 900° C dans la zone à préchauffer, c'est-à-dire au voisinage des surfaces 16 et 20, la température au voisinage de la surface externe 33 de la pièce 12 et de la surface interne 34 de la pièce 19 pouvant être inférieure. Bien entendu la température atteinte est fonction de la puissance de la source d'alimentation. De façon classique les inducteurs 30 et 31 sont refroidis à l'eau.

En variante on ne prévoit qu'un seul inducteur 30 ou 31. Toutefois on préfèrera, pour une meilleure uniformité de la température, l'utilisation de deux inducteurs.

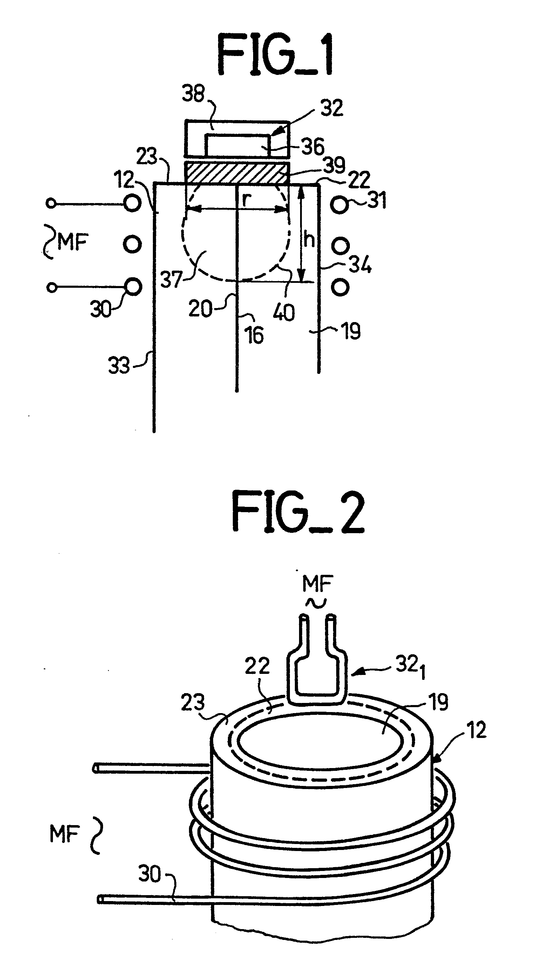

L'inducteur de fusion 32 comporte, dans l'exemple de la figure 1, une spire 36 ayant la forme d'un tore engendré par la rotation d'un rectangle en regard des faces 22 et 23 autour de l'axe commun aux surfaces cylindriques des pièces 12 et 19. La spire 36 est refroidie à l'eau, comme les spires des inducteurs 30 et 31. Pour que le flux magnétique engendré par la spire 36 soit concentré dans la zone utile 37, c'est-à-dire au voisinage des surfaces 20 et 16 à partir des faces 22 et 23, cette spire 36 présente un blindage 38 en tôle magnétique ayant la forme générale d'un U ouvert vers les faces 22 et 23.

Pour assurer un bon couplage la spire 36 est à une distance minimum des faces 22 et 23. Toutefois entre cette spire 36 et ces faces on intercale une couronne 39 en matériau réfractaire, qui est appliquée à pression contre les faces 22 et 23. Cette couronne 39 s'étend sur une longueur radiale r supérieure à la longueur correspondante de la spire 36. Son rôle est d'empêcher que le métal en fusion dans la zone 37 s'échappe vers l'extérieur du fait de l'action du champ électromagnétique produit par la bobine 36 et du bouillonnement dû à la fusion elle-même. En outre la couronne 39 assure une isolation thermique favorable à la création du puits liquide.

L'inducteur 32 est alimenté par une source moyenne fréquence distincte de celle alimentant les inducteurs 30 et 31. Sa fréquence est comprise entre 1000 et 20 000 Hertz.

Pour effectuer le soudage on effectue d'abord le préchauffage en alimentant les inducteurs 30 et 31, l'inducteur de fusion 32 étant hors d'action. Puis, lorsque la température dans la zone 37 a atteint la valeur désirée, par exemple 200 à 300° C au-desous du point de fusion de la fonte, on alimente l'inducteur 32 de fusion, les inducteurs 30 et 31 restant alimentés.

On obtient ainsi un puits de fusion dans la zone 37 qui est limité par la ligne 40 en traits interrompus sur la figure 1. Après refroidissement on obtient une soudure de bonne qualité sur la profondeur h désirée. Ce résultat est atteint grâce au procédé de l'invention qui permet d'obtenir la configuration particulière, relativement allongée selon la direction axiale et suffisamment étroite en direction radiale, du puits de fusion limité par la ligne 40.

Dans l'exemple représenté sur la figure 2 l'inducteur de fusion $32_1$ est de plus petites dimensions que l'inducteur 32 représenté sur la figure 2. Il est constitué par une spire qu'on déplace au droit des tranches 22 et 23 autour de l'axe 24. Le soudage est ainsi effectué au défilé.

Dans une variante (non représentée) le préchauffage est également effectué au défilé.

Les surfaces d'extrémité 22 et 23 ne sont pas forcément coplanaires. En variante (également non représentée) l'angle entre ces faces est obtus de façon qu'elles soient inclinées en pente descendante vers les surfaces en contact 16 et 20 et, ainsi, à former une cuvette retenant le liquide en fusion qui pourrait être chassé par les forces électromagnétiques engendrées par l'inducteur. On réduit également ainsi les risques de courts-circuits vis-à-vis de l'inducteur et on obtient peu de boursouflures ainsi qu'un bon état de surface.

L'invention s'applique non seulement dans le cas où la soudure est homogène mais également lorsqu'on prévoit un métal d'apport pour effectuer la soudure entre les surfaces 16 et 20.

L'invention n'est bien entendu pas limitée à l'application décrite. En particulier elle peut être utilisée pour le soudage de plaques métalliques épaisses, planes ou non. Dans le cas de plaques planes on prévoit des inducteurs de préchauffage de part et d'autre des plaques appliquées l'une contre l'autre, ou un seul inducteur de préchauffage d'un côté, et un inducteur de fusion à proximité de la tranche des deux plaques à souder.

La qualité des soudures obtenues et surtout l'importance de la profondeur h rendent l'invention particulièrement intéressante pour souder les couvercles aux extrémités de cuves en fonte destinées à contenir les déchets radio-actifs de l'industrie nucléaire.

L'étendue de la zone 37 et donc la profondeur h dépend de l'énergie de préchauffage. C'est pourquoi, dans une réalisation, on prévoit un moyen de réglage de l'énergie de préchauffage pour ajuster à la valeur désirée la profondeur h de la soudure.

Dans les cas où le soudage s'effectue sur des pièces où le bain de métal liquide risque de s'échapper sous l'action de la force de gravité, on le maintient en place par l'action d'une force électromagnétique de sustentation générée par des moyens appropriés.

Outre les applications décrites ci-dessus, l'invention peut être utilisée, entre autres, pour le soudage bout à bout de pièces métalliques à symétrie de révolution, comme par exemple des tuyaux utilisés en chaudronnerie pétrolière ou des tuyaux de forages pétroliers, ou bien pour le soudage bord à bord d'éléments de grosse chaudronnerie, par exemple en construction navale.

Selon l'invention, on peut également fractionner l'un au moins des inducteurs en plusieurs inducteurs élémentaires alimentés en série et/ou en parallèle et/ou cycliquement, ces inducteurs s'étendant sur une partie ou sur la totalité de la zone à chauffer.

De façon avantageuse, on refroidit pendant la fusion, par exemple à l'aide d'un jet d'air, les parois latérales des pièces soumises au soudage dans la zone de chauffage, afin d'éviter tout risque de déformation de ces parois et de contrôler la forme du puits de fusion.

Les puissances de préchauffage et de chauffage sont avantageusement régulées, afin d'obtenir la forme désirée de puits de fusion.

REVENDICATIONS

1. Procédé de soudage par induction de deux éléments métalliques (12, 19) épais présentant des surfaces (16, 20) à souder se terminant par des faces d'extrémité respectives (22, 23), dans lequel on effectue un préchauffage par induction des deux éléments pour les amener à une température inférieure au point de fusion, caractérisé en ce qu'on chauffe localement les deux éléments par induction à partir des faces d'extrémité (22, 23) de façon à porter à l'état liquide le métal au voisinage des surfaces à souder.

2. Procédé selon la revendication 1, caractérisé en ce que le second chauffage par induction est effectué après le préchauffage.

3. Procédé selon la revendication 2, caractérisé en ce que l'apport d'énergie de préchauffage est maintenu lors du second chauffage par induction.

4. Procédé selon l'une quelconque des revendications précédentes, caractérisé en ce que la puissance et la fréquence mises en oeuvre lors du préchauffage par induction sont telles que la température atteinte par le métal à liquéfier est légèrement inférieure à la température de fusion de ce métal.

5. Procédé selon l'une quelconque des revendications précédentes, caractérisé en ce que pour faire varier la profondeur (h) de la soudure à partir des faces d'extrémité (22, 23) on fait varier l'énergie du préchauffage par induction.

6. Procédé selon l'une quelconque des revendications précédentes, caractérisé en ce que les faces d'extrémité (22, 23) sont coplanaires.

7. Procédé selon l'une quelconque des revendications 1 à 5, caractérisé en ce que les faces d'extrémité (22, 23) font entre elles un angle obtus de façon à former une cuvette de retenue du liquide en fusion.

8. Procédé selon l'une quelconque des revendications précédentes, caractérisé en ce que, la soudure étant homogène, les deux surfaces à souder (16, 20) sont en contact.

9. Procédé selon l'une quelconque des revendications 1 à 7, caractérisé en ce qu'un métal d'apport est interposé entre les deux surfaces à souder.

10. Appareil pour la mise en oeuvre du procédé selon l'une quelconque des revendications précédentes, caractérisé en ce qu'il comporte au moins un inducteur (30, 31) de préchauffage alimenté par une première source moyenne fréquence et un inducteur de fusion (32) alimenté par une seconde source moyenne fréquence, distincte de la première.

11. Appareil selon la revendication 10, caractérisé en ce que la fréquence de la première source est comprise entre 50 et 1000 Hertz.

12. Appareil selon la revendication 10 ou 11, caractérisé en ce qu'il comporte deux inducteurs (30, 31) de préchauffage disposés de part et d'autre des éléments à souder et qui sont alimentés en énergie électrique par une même source moyenne fréquence.

13. Appareil selon la revendication 12, caractérisé en ce que les deux inducteurs de préchauffage (30, 31) sont en série.

14. Appareil selon l'une quelconque des revendications 10 à 13, caractérisé en ce qu'entre l'inducteur de fusion (32) et les faces d'extrémité (22, 23) des éléments à souder est interposé un élément réfractaire (39).

15. Appareil selon l'une quelconque des revendications 10 à 14, caractérisé en ce que l'inducteur de fusion (32) présente une ou plusieurs spire(s) (36) entourée(s) d'un blindage (38) ouvert en direction des faces d'extrémité.

16. Appareil selon l'une quelconque des revendications 10 à 15, caractérisé en ce que l'inducteur de fusion (32) s'étend sur toute la longueur de la face d'extrémité (22, 23).

17. Appareil selon l'une quelconque des revendications 10 à 15, caractérisé en ce que l'inducteur de fusion s'étend sur une longueur inférieure à celle à souder, cet inducteur de fusion $(32_1)$ étant déplaçable le long de la face d'extrémité (22, 23).

18. Appareil selon l'une quelconque des revendications 10 à 17, caractérisé en ce que l'inducteur de préchauffage (30, 31) occupe toute la longueur des éléments à souder.

19. Appareil selon l'une quelconque des revendications 10 à 17, caractérisé en ce que l'inducteur de préchauffage n'occupe qu'une fraction de la longueur à souder, cet inducteur étant déplaçable.

20. Application du procédé ou de l'appareil selon l'une quelconque des revendications précédentes, au soudage du rebord d'un couvercle à l'extrémité d'une cuve cylindrique, notamment destinée à contenir des déchets radioactifs.

21. Application du procédé ou de l'appareil selon l'une quelconque des revendications précédentes au soudage de pièces où le bain de métal liquide risque de s'échapper sous l'action de la force de gravité, caractérisé en ce qu'on maintient ce bain par l'action d'une force électromagnétique de sustentation.

22. Procédé selon l'une quelconque des revendications 1 à 9, mis en oeuvre à l'aide d'au moins un inducteur fractionné, caractérisé en ce que l'on alimente cycliquement les inducteurs élémentaires.

23. Procédé selon l'une quelconque des revendications 1 à 9 ou 22, caractérisé en ce que l'on refroidit, pendant la fusion, les parois latérales des pièces soumises au soudage, dans la zone de chauffage.

24. Procédé selon l'une quelconque des revendications 1 à 9 ou 22 à 23, caractérisé en ce que l'on régule les puissances de préchauffage et de chauffage afin d'obtenir la forme désirée de puits de fusion.

25. Appareil selon l'une quelconque des revendications 10 à 19, caractérisé en ce que l'un au moins des inducteurs est fractionné en plusieurs inducteurs élémentaires alimentés en série.

26. Appareil selon l'une quelconque des revendications 10 à 19, caractérisé en ce que l'un au moins des inducteurs est fractionné en plusieurs inducteurs élémentaires alimentés en parallèle.

# FIG_1

# FIG_2

Office européen
des brevets

RAPPORT DE RECHERCHE EUROPEENNE

0168314
Numero de la demande

EP 85 40 1300

## DOCUMENTS CONSIDERES COMME PERTINENTS

| Catégorie | Citation du document avec indication en cas de besoin des parties pertinentes | Revendication concernee | CLASSEMENT DE LA DEMANDE (Int Cl 4) |
|---|---|---|---|
| X | US-A-3 621 175 (INDUSTRIAL MAGNETICS) * En entier * | 1-3,6, 19,21 | B 23 K 13/00 B 23 K 13/02 |
| Y | | 9,15, 17 | |
| | --- | | |
| Y | GB-A-2 100 641 (KAWASAKI) * Résumé * | 9,17 | |
| | --- | | |
| Y | US-A-3 248 512 (OHIO CRANKSHAFT) * Figure 1 * | 15 | |
| | --- | | |
| A | US-A-3 156 042 (A.O. SMITH) | | |
| | --- | | |
| A | FR-A-1 595 055 (SIEMENS) | | |
| | ----- | | |

DOMAINES TECHNIQUES RECHERCHES (Int. Cl.4)

B 23 K

Le present rapport de recherche a été établi pour toutes les revendications

| Lieu de la recherche | Date d'achèvement de la recherche | Examinateur |
|---|---|---|
| LA HAYE | 04-09-1985 | HOORNAERT W. |